# EUROPEAN PATENT APPLICATION

(11) **EP 4 685 639 A1**
(43) Date of publication of application: **28.01.2026**
(21) Application number: 25189231.1
(22) Date of filing: 14.07.2025
(51) Int. Cl.: G06F 9/455

(54) **NESTED VIRTUALIZATION WITH ENHANCED NETWORK CONNECTIVITY AND HARDWARE OFFLOADING**

(30) Priority: 25.07.2024 US 202418783996
(71) Applicant: Microsoft Technology Licensing, LLC, Redmond, WA 98052 (US)
(72) Inventor: TAN, Alvin Khee Liang, Redmond, 98052 (US); MUTHUSWAMY, Sunil, Redmond, 98052 (US); CUSANZA, Gregory, Redmond, 98052 (US); MALLOY, Dmitry, Redmond, 98052 (US); REUTHER, Lars, Redmond, 98052 (US); TIPPET, Jeffrey, Redmond, 98052 (US); VASILE, Narcisa Ana Maria, Redmond, 98052 (US); ZHOU, Jie, Redmond, 98052 (US); AGGARWAL, Chandan, Redmond, 98052 (US)
(74) Representative: CMS Cameron McKenna Nabarro Olswang LLP

(57) **Abstract**

A method is disclosed for managing network communication in a virtual machine hosting computer system with nested child partitions. The method involves loading a network driver in a level-one child partition and creating a virtual switch within the level-one child partition. The virtual switch establishes a synthetic data path between a synthetic network adapter offered by a root partition and a network driver in a level-two child partition. A network interface controller (NIC) switch capability is exposed to the virtual switch, and a peripheral component interconnect express (PCle) virtual function offered by the root partition is passed from the level-one child partition to the level-two child partition, enabling the level-two child partition to take advantage of the PCIe virtual function.

## Description

### BACKGROUND

Hypervisor-based virtualization technologies allocate portions of a computer system's physical resources (e.g., processor resources, physical memory resources, storage resources) into separate partitions and execute software within each partition. Therefore, hypervisor-based virtualization technologies facilitate the creation of guest virtual machines (VMs) that each execute guest software, such as an operating system (OS) and applications executing therein. A computer system that hosts guest VMs is commonly called a VM host or a VM host node.

While hypervisor-based virtualization technologies can take various forms, many use an architecture comprising a type-one, or bare-metal, hypervisor that has direct access to hardware and operates in a separate execution environment from all other software in the computer system. A type-one hypervisor creates a root (or host) partition (e.g., a host VM) and one or more child (or guest) partitions (e.g., guest VMs). Each partition comprises an isolated slice of the underlying hardware of the VM host, such as memory and processor resources. The root partition executes a host OS and a host virtualization stack that manages the child partitions. Thus, the hypervisor grants the root partition a greater level of access to the hypervisor and to hardware resources than it does to child partitions. Other hypervisor-based architectures comprise a type-two, or hosted, hypervisor that executes within the context of an underlying OS and creates one or more child partitions.

Taking HYPER-V from MICROSOFT CORPORATION as one example, the HYPER-V hypervisor is a type-one hypervisor making up the lowest layer of a HYPER-V stack. The HYPER-V hypervisor provides basic functionality for dispatching and executing virtual processors for guest VMs. The HYPER-V hypervisor takes ownership of hardware virtualization capabilities (e.g., second-level address translation processor extensions such as rapid virtualization indexing from ADVANCED MICRO DEVICES or extended page tables from INTEL; an input/output (I/O) memory management unit that connects a direct memory access-capable I/O bus to main memory; processor virtualization controls). The HYPER-V hypervisor also provides a set of interfaces to allow a HYPER-V host stack within a root partition to leverage these virtualization capabilities to manage guest VMs. The HYPER-V host stack provides general functionality for guest VM virtualization (e.g., memory management, guest VM lifecycle management, device virtualization).

Hypervisor-based virtualization technologies rely on the use of paravirtual devices. Paravirtual devices are software-based representations of physical hardware. Paravirtual devices are assigned to guest VMs, allowing the guest VMs to interact with physical hardware. Paravirtual devices are designed to reduce virtualization overhead compared to fully emulated devices by providing a more direct interface between the guest VM and the physical hardware than fully emulated devices. One example of a paravirtual device is a synthetic virtualization of a network adapter, referred to herein as a "synthetic network adapter," that a root partition exposes to a guest VM as a VM network adapter (vmNIC). A vmNIC is a virtualized network interface that enables communications between a guest VM and a physical network to which the VM host is connected. The guest VM uses a paravirtual network driver to interface with the vmNIC, allowing the guest VM to connect to the network and exchange data with other devices. Examples of paravirtual network drivers include network virtual service client (NetVSC) and VirtlO.

Some hypervisors support nested virtualization and/or hierarchical virtualization, in which a guest VM hosts one or more child partitions within the guest VM's allocation of resources. With nested virtualization, a child partition operates a separate hypervisor to become a level-one hosting partition that subdivides its resources into one or more level-two child partitions (called level-two guest VMs, or L2GVMs) operating within the hosting partition's context. With hierarchical virtualization, a child partition requests that the hypervisor managing the child partition also create one or more child partitions using the child partition's resources, thereby becoming a level-one hosting partition operating one or more level-two child partitions (also called L2GVMs) that run directly on the same hypervisor that manages the hosting partition, itself. Nested/hierarchical virtualization is beneficial because running VMs within other VMs can enhance resource utilization (e.g., by more fully utilizing the resources allocated to a hosting partition), can enable sophisticated testing environments (e.g., by simulating real-world multi-tiered infrastructure setups), and can enhance workload management (e.g., by enabling related workloads to be managed by a single hosting partition while still supporting isolation of those workloads within the hosting partition), among other things.

The subject matter claimed herein is not limited to embodiments that solve any disadvantages or that operate only in environments such as those described *supra.* Instead, this background is only provided to illustrate one example technology area where some embodiments described herein may be practiced.

### SUMMARY

In some aspects, the techniques described herein relate to methods, systems, and computer program products, including, at a level-one child partition of the computer system: loading a first network driver in the level-one child partition, the first network driver exposing a first synthetic network adapter of a root partition of the computer system to the level-one child partition; creating a virtual switch within the level-one child partition; establishing, by the virtual switch, a synthetic data path between the first synthetic network adapter and a second network driver executing in a level-two child partition created by the level-one child partition; exposing a network interface controller (NIC) switch capability associated with the first network driver to the virtual switch; identifying an offer by the root partition of a first Peripheral Component Interconnect (PCI) Express (PCle) virtual function (VF) to the level-one child partition; and offering the first PCle VF to the level-two child partition.

In some aspects, the techniques described herein relate to methods, systems, and computer program products, including, at a level-one child partition of the computer system: loading a first network driver in the level-one child partition, the first network driver exposing a first synthetic network adapter of a root partition of the computer system to the level-one child partition; creating a virtual switch within the level-one child partition; establishing, by the virtual switch, a synthetic data path between the first synthetic network adapter and a second network driver executing in a level-two child partition created by the level-one child partition; exposing a NIC switch capability associated with the first network driver to the virtual switch based on instantiating a filter driver that emulates one or more NIC switch functions; identifying an offer by the root partition of a first PCle VF to the level-one child partition; and offering the first PCle VF to the level-two child partition.

In some aspects, the techniques described herein relate to methods, systems, and computer program products, including, at a level-one child partition of a computer system: loading a first network virtual service client (netVSC) driver in the level-one child partition, the first netVSC driver exposing a first synthetic network adapter of a root partition of the computer system to the level-one child partition; creating a virtual switch within the level-one child partition; establishing, by the virtual switch, a synthetic data path between the first synthetic network adapter and a second netVSC driver executing in a level-two child partition created by the level-one child partition; loading a virtual PCI virtual service provider (VPCI VSP) in the level-one child partition; loading a filter driver that emulates one or more network interface controller (NIC) switch functions; exposing, by the filter driver, a NIC switch capability associated with the first netVSC driver to the virtual switch; identifying an offer by the root partition of a first PCle VF to the level-one child partition; and offering the first PCle VF to the level-two child partition by the VPCI provider.

This Summary introduces a selection of concepts in a simplified form that are further described below in the Detailed Description. This Summary is not intended to identify key features or essential features of the claimed subject matter, nor is it intended to be used to determine the scope of the claimed subject matter.

### BRIEF DESCRIPTION OF THE DRAWINGS

To describe how the advantages of the systems and methods described herein can be obtained, a more particular description of the embodiments briefly described *supra* is rendered by reference to specific embodiments thereof, which are illustrated in the appended drawings. These drawings depict only typical embodiments of the systems and methods described herein and are not, therefore, to be considered to be limiting in their scope. Systems and methods are described and explained with additional specificity and detail through the use of the accompanying drawings, in which:
Figures 1A-1B illustrate an example of a computer architecture that enables a level-two guest virtual machine (VM) (L2GVM) to take advantage of the performance benefits of single root input/output virtualization by facilitating the passthrough of a peripheral component interconnect express (PCle) virtual function (VF) from a root partition to an L2GVM executing within a hosting partition;
Figure 2 illustrates an example of components of a network stack of a hosting partition that facilitates the passthrough of a PCIe virtual VF from a root partition to an L2GVM executing within the hosting partition; and
Figure 3 illustrates a flow chart of an example of a method for passing through a PCIe VF from a root partition to an L2GVM executing within a hosting partition.

### DETAILED DESCRIPTION

Some physical network adapters expressly support virtualization through single root input/output virtualization (SR-IOV) technology that exposes virtual functions (VFs) to guest virtual machines (VMs). A VF is a lightweight peripheral component interconnect (PCI) express (PCle) function on a network adapter that supports SR-IOV. A VF is associated with a PCle physical function (PF) on the physical network adapter. The VF represents a virtualized instance of the network adapter. Each VF has its own PCI configuration space and shares physical resource(s) on the physical network adapter, such as an external network port, with the PF and other VFs. While a VF is not a full-fledged PCle device, it provides a direct transfer of data between a guest VM and the underlying SR-IOV network adapter, which improves performance (e.g., increased data transfer rate, reduced latency, reduced processor utilization) compared to purely paravirtual network devices.

Currently, SR-IOV implementations assign a single VF to each child partition, and that child partition consumes the VF. Thus, in current SR-IOV implementations, an L1 hosting partition consumes the single VF assigned to that L1 hosting partition, making a VF unavailable to any of the L2 child partitions operating within the hosting partition's context. Thus, L2GVMs cannot take advantage of the performance benefits of SR-IOV. So, while an L1 hosting partition can take advantage of the performance benefits of SR-IOV-based networking, the L1 hosting partition cannot share those benefits with any L2 child partitions it creates. Instead, those L2 child partitions rely on lower-performance networking interfaces, such as a purely paravirtual network device, which may be unsuitable for many workloads and which may prevent the use of L2 child partitions for those workloads. As a result, the ability to fully realize the advantages of nested/hierarchical virtualization is limited.

At least some embodiments described herein overcome these challenges by projecting a synthetic network adapter as a VM network interface controller (NIC), or vmNIC, from a root partition into an L2GVM supported by a hosting partition. These embodiments create a synthetic data path from the root partition to the L2GM, based on using a virtual switch operating in the hosting partition as a point-to-point switch transporting network packets between the root vmNIC and a vmNIC created by the virtual switch and exposed by the virtual switch as a paravirtual network interface to the L2GVM. These embodiments also introduce a filter driver at the hosting partition, which interacts with a network driver at the hosting partition to present the root vmNIC to the virtual switch as if the root vmNIC has a "NIC switch" capability. Generally, a NIC switch is a hardware component of an SR-IOV-capable physical network adapter. On a physical network adapter, a NIC switch bridges network traffic between the adapter's physical network interface, the adapter's PF, and any VFs on the adapter. Together, using a virtual switch in a hosting partition to create a synthetic data path from the root partition to an L2GM in the hosting partition and presenting the root vmNIC as being NIC switch-capable to the virtual switch allows a hosting partition to pass a VF from the root partition to the L2GVM. This, in turn, enables the L2GVM to take advantage of the performance benefits of SR-IOV. Notably, these embodiments can operate with existing paravirtual network interfaces and drivers, meaning a guest operating system (OS) at an L2GVM can take advantage of SR-IOV without any modification.

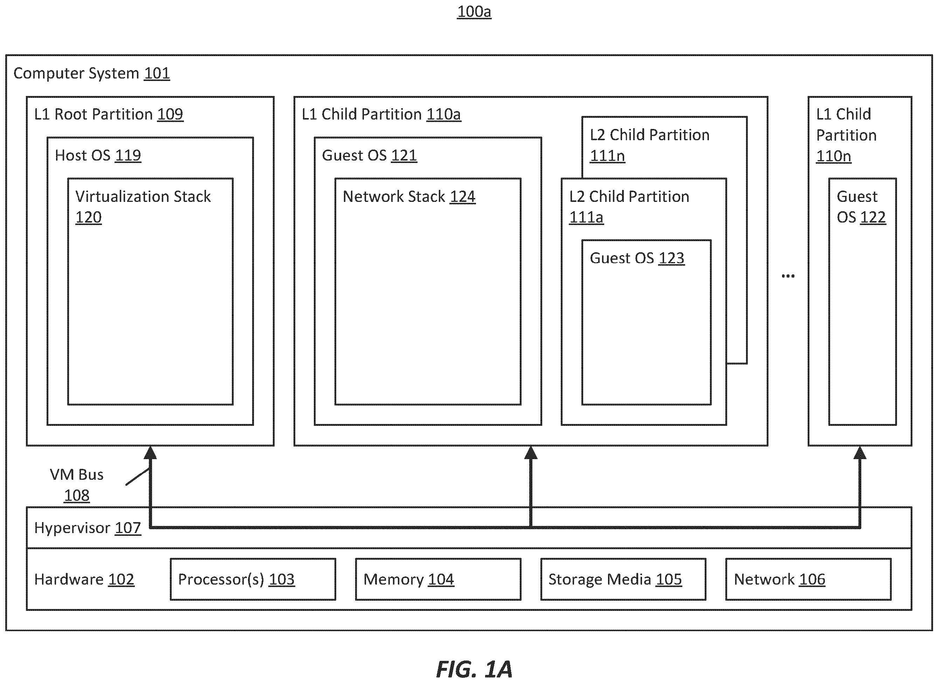

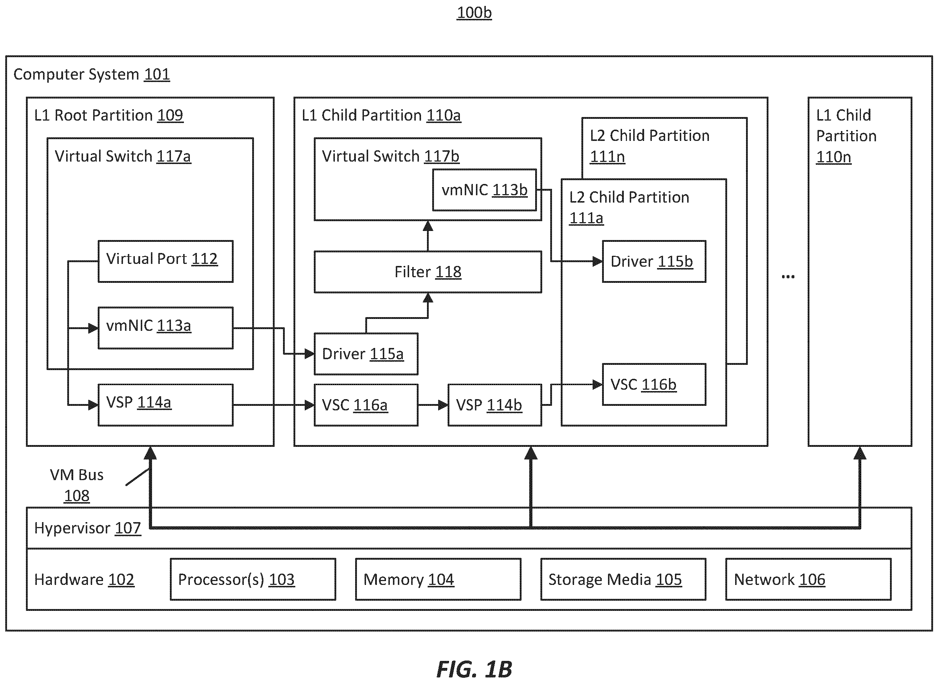

Figures 1A-1B illustrate an example of computer architecture 100 (computer architecture 100a, Figure 1A; computer architecture 100b, Figure 1B) that enables an L2GVM to take advantage of the performance benefits of SR-IOV by facilitating the passthrough of a PCIe VF from a root partition to an L2GVM executing within a hosting partition. Turning initially to Figure 1A, as shown, computer architecture 100 includes a computer system 101 (e.g., a VM host) that comprises hardware 102. Examples of hardware 102 include a processor system 103 (e.g., a single processor or a plurality of processors), a memory 104 (e.g., system or main memory), a storage medium 105 (e.g., a single computer-readable storage medium, or a plurality of computer-readable storage media), and a network interface 106 (e.g., one or more network interface cards) for interconnecting to one or more other computer systems (not shown). In computer architecture 100, network interface 106 is SR-IOV capable, e.g., including a NIC switch bridges network traffic between a physical network interface of network interface 106, a PF of network interface 106, and any VFs on network interface 106. Although not shown, hardware 102 may also include other hardware devices, such as a trusted platform module (TPM) for facilitating measured boot features, an input/output (I/O) memory management unit (IOMMU) that connects a direct memory access (DMA)-capable I/O bus to memory 104, a video display interface for connecting to display hardware, a user input interface for connecting to user input devices, an external bus for connecting to external devices, and the like.

As shown in Figure 1A, computer architecture 100 includes a hypervisor 107, which in Figure 1A is a type-one hypervisor that executes directly on hardware 102. However, the embodiments herein are also applicable to type-two hypervisor environments. As shown, hypervisor 107 partitions hardware resources (e.g., processor system 103, memory 104, I/O resources) among a plurality of level-one (L1) partitions, including a root partition 109 (e.g., running a host OS 119 and a virtualization stack 120) and one or more L1 child partitions 110 (guest VMs), shown as L1 child partition 110a to L1 child partition 110n. Each L1 child partition 110 runs a corresponding guest OS, such as guest OS 121 in child partition 110a and guest OS 122 in child partition 110n. In embodiments, root partition 109 communicates with child partitions 110 via hypervisor 107 using a VM bus 108. In embodiments, at least one of the L1 child partitions 110 is configured to operate as a hosting partition that, in turn, hosts one or more L2 child partitions. For example, in computer architecture 100, L1 child partition 110a includes L2 child partitions 111 (L2GVMs), as shown as L2 child partition 111a to L2 child partition 111n. Each L2 child partition 111 runs a corresponding guest OS, such as guest OS 123 in child partition 111a. In some embodiments, L1 child partition 110a relies on hypervisor 107 to create child partitions 111 (e.g., hierarchical virtualization). In other embodiments, L1 child partition 110a hosts its own hypervisor to create child partitions 111 (e.g., nested virtualization).

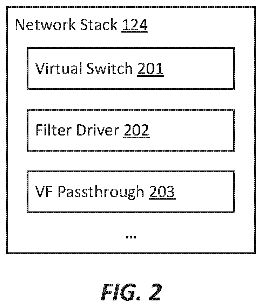

In Figure 1A, guest OS 121 includes a network stack 124 that, in accordance with the embodiments herein, is configured to enable child partitions 111 (L2GVMs) to take advantage of the performance benefits of the SR-IOV of network interface 106 by configuring a hosting partition (e.g., child partition 110a) to pass through a PCIe VF from root partition 109 to an L2GVM (e.g., child partition 111a) executing within the hosting partition. These embodiments are described in further detail in reference to Figures 1B and 2. Figure 1B details components at root partition 109 (e.g., created by virtualization stack 120), child partition 110a (e.g., created by network stack 124), and child partition 111a (e.g., created by guest OS 123). Figure 2 illustrates an example of network stack 124, including components that facilitate the passthrough of a PCIe virtual VF from a root partition to an L2GVM executing within the hosting partition.

Figure 1B illustrates root partition 109 as including a virtual switch 117a, which in turn includes a virtual port 112 assigned to child partition 110a. For example, a network stack (e.g., part of the host OS 119 and/or the virtualization stack 120) initializes virtual switch 117a, as corresponding to network interface 106. The network stack also allocates virtual port 112, corresponding to child partition 110a, as part of virtual switch 117a. Figure 1B also illustrates root partition 109 as including a vmNIC 113a and as including a virtual PCI (VPCI) virtual service provider (VSP) 114a (VPCI VSP 114a). In embodiments, vmNIC 113a is a synthetic network adapter connecting virtual port 112, and root partition 109 exposes that synthetic network adapter to child partition 110a as a paravirtual network interface adapter. In embodiments, VPCI VSP 114a is exposes a VF to child partition 110a.

Turning to child partition 110a, Figure 1B illustrates child partition 110a as including driver 115a. An arrow, which connects vmNIC 113a and driver 115a, shows that driver 115a is a network driver configured for interfacing with vmNIC 113a, including exposing vmNIC 113a to guest OS 121. In embodiments, driver 115a is a paravirtual driver, such as network virtual service client (netVSC), VirtlO, etc. In some embodiments, driver 115a is a conventional network driver. That is, driver 115a is unmodified to support the embodiments described herein for facilitating the passthrough of a PCIe virtual VF from a root partition to an L2GVM. In other embodiments, driver 115a is modified to, e.g., include the functionality of a filter 118, described hereinafter.

Figure 1B illustrates child partition 110a as including a VPCI virtual service client (VSC) 116a. In embodiments, VPCI VSC 116a is a VPCI VSC. An arrow connecting VPCI VSP 114a and VPCI VSC 116a shows that VPCI VSC 116a is a client of VPCI VSP 114a for consuming a VF of virtual switch 117a that is exposed to child partition 110a by VPCI VSP 114a.

Conventionally, a guest OS (e.g., guest OS 122) would utilize a VPCI VSC, such as VPCI VSC 116a, to consume a VF at its child partition (e.g., child partition 110n), enabling network communications by that guest OS, including any applications executing thereon, to utilize SR-IOV capabilities of network interface 106. However, network stack 124 is configured to pass a VF to an L2GVM instead. In Figure 2, network stack 124 includes a virtual switch component 201, which creates a virtual switch 117b at child partition 110a. Within virtual switch 117b, virtual switch component 201 also creates a vmNIC 113b and exposes vmNIC 113b to child partition 111a. As shown, child partition 111a includes a driver 115b (e.g., netVSC, VirtlO) configured for interfacing with vmNIC 113b, including exposing vmNIC 113b to guest OS 123. In embodiments, virtual switch component 201 configures virtual switch 117b in a point-to-point mode that establishes a synthetic data path between vmNIC 113a and driver 115b, enabling the flow of network packets between root partition 109 and child partition 111a.

In embodiments, network stack 124 also includes a filter driver component 202 and a VF passthrough component 203, which facilitate that passthrough of the VF exposed by VPCI VSP 114a of root partition 109 from VPCI VSC 116a in child partition 110a to a VPCI VSC 116b executing in child partition 111a. As shown, in embodiments filter 118 is communicatively between driver 115a and virtual switch 117b and presents driver 115a (and, by extension, vmNIC 113a) to virtual switch 117b as being NIC switch capable. This means that, to virtual switch 117b, vmNIC 113a now appears to be capable of creating and offering VFs. In embodiments, the use of filter 118 enables the use of drivers (e.g., driver 115a) that are unmodified to support VF passthrough to an L2GVM. This enables the embodiments herein to be applied to various paravirtual interface types while using unmodified drivers. As an alternative, other embodiments may modify the driver itself rather than introducing filter 118.

In embodiments, the VF passthrough component 203 orchestrates the passthrough of a VF offered by VPCI VSP 114a to VPCI VSC 116b. In embodiments, the VF passthrough component 203 includes a VPCI VSP 114b within child partition 110a, and VPCI VSP 114b offers the VF to VPCI VSC 116b. In embodiments, VF passthrough component 203 also coordinates with virtual switch 117b to, e.g., bind the VF offered by VPCI VSP 114b to vmNIC 113 so that the VF appears to driver 115b to be associated with vmNIC 113b.

In view of the following, once child partition 111a has loaded driver 115b and used VPCI VSC 116b to accept the passthrough offer of the VF by VPCI VSP 114b, child partition 111a can use that VF to take advantage of the SR-IOV capabilities of the network interface 106.

Notably, Figure 1B illustrates the passthrough of a single root VF to a single L2GVM. However, embodiments of network stack 124 are capable of passing through any number of VFs that network interface 106 supports to L2GVMs. In these embodiments, network stack 124 can be utilized to establish each VF/L2GVM pairing. For example, virtual switch 117a at root partition 109 exposes additional instances of a vmNIC to child partition 110a and VPCI VSP offers an additional VF to child partition 110a. Network stack 124 at child partition 110a, in turn, initializes a corresponding virtual switch instance (including an additional vmNIC). Network stack 124 then creates a synthetic data path between root partition 109 and child partition 111n and passes the additional VF to child partition 111n.

It is noted that the embodiments are also compatible with a hosting partition consuming a PCle VF itself. For example, root partition 109 may expose a plurality of VFs to child partition 110a. In turn, child partition 110a can consume one of those VFs itself (e.g., using conventional techniques) and pass one or more additional VFs through to one or more corresponding L2GVMs.

In Figure 2, an ellipsis in network stack 124 indicates that network stack 124 can include additional functionality. In one example, this functionality includes the ability of network stack 124 (and/or guest OS 121) to communicate and coordinate with root partition 109 to request an additional VF, destroy an existing VF, and the like. In another example, this functionality includes the ability of network stack 124 (and/or guest OS 121) to determine what to do with a given VF based, e.g., on a medium access control address (MAC) address associated with a given VF. In another example, this functionality includes the ability of network stack 124 (and/or guest OS 121) to determine whether a given VF is assignable to an L2GVM or not and either consume (e.g., when unassignable) or passthrough the VF (e.g., when assignable) accordingly.

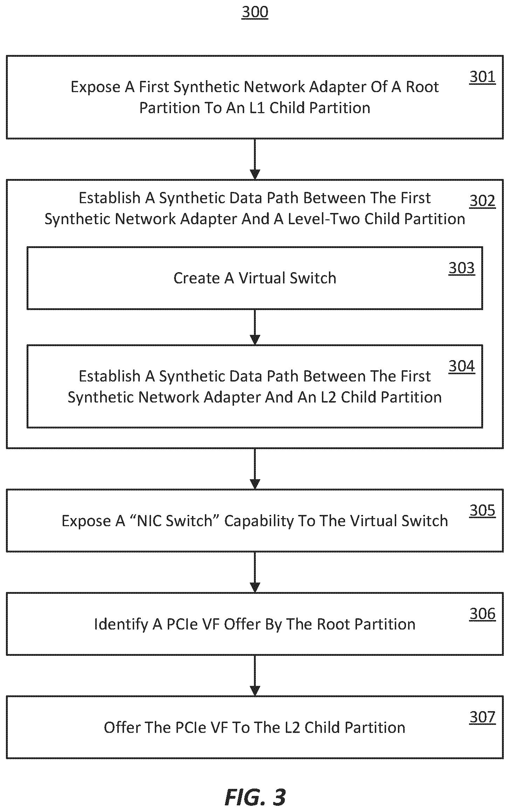

Embodiments are now described in connection with Figure 3, which illustrates a flow chart of an example method 300 for passing through a PCIe VF from a root partition to an L2GVM executing within a hosting partition. In embodiments, instructions for implementing method 300 are encoded as computer-executable instructions (e.g., implementing network stack 124) stored on a computer storage medium (e.g., storage medium 105) that are executable by a processor (e.g., processor system 103) to cause a computer system (e.g., computer system 101) to perform method 300. In embodiments, method 300 is implemented at an L1 child partition (e.g., child partition 110a) of a computer system (e.g., computer system 101).

The following discussion now refers to methods and method acts. Although the method acts are discussed in specific orders or are illustrated in a flow chart as occurring in a particular order, no order is required unless expressly stated or required because an act is dependent on another act being completed before the act is performed.

Method 300 comprises act 301 of exposing a first synthetic network adapter of a root partition to an L1 child partition. In some embodiments, act 301 comprises loading a first network driver in the L1 child partition, the first network driver exposing a first synthetic network adapter of a root partition of the computer system to the L1 child partition. For example, the network stack 124 loads the driver 115a, which then exposes vmNIC 113a to child partition 110a, including, e.g., exposing vmNIC 113a to guest OS 121.

Method 300 comprises act 302 of establishing a synthetic data path between the first synthetic network adapter and an L2 child partition. In some embodiments, act 302 comprises an act 303 of creating a virtual switch. In some embodiments, act 303 comprises creating a virtual switch within the L1 child partition. For example, virtual switch component 201 creates virtual switch 117b within child partition 110a. In some embodiments, act 302 comprises an act 304 of establishing the synthetic data path via the virtual switch. In some embodiments, act 304 comprises establishing, by the virtual switch, a synthetic data path between the first synthetic network adapter and a second network driver executing in an L2 child partition created by the L1 child partition. For example, virtual switch component 201 configures virtual switch 117b as a point-to-point switch that transports network packets between vmNIC 113a (e.g., the first synthetic network adapter) and driver 115b (e.g., the second network driver). As discussed, embodiments include creating vmNIC 113b at virtual switch 117b and exposing vmNIC 113b to child partition 111a. Thus, in some embodiments of method 300, the virtual switch exposes the second synthetic network adapter (e.g., vmNIC 113b) to the L2 child partition. The second network driver (e.g., driver 115b) then exposes the second synthetic network adapter to the L2 child partition.

Method 300 also comprises act 305 of exposing a "NIC switch" capability to the virtual switch. In some embodiments, act 305 comprises exposing a NIC switch capability associated with the first network driver to the virtual switch. In one example, act 305 includes instantiating the filter 118, which is communicatively between driver 115a and virtual switch 117b, and which presents driver 115a (and, by extension, vmNIC 113a) to virtual switch 117b as being NIC switch capable. This means that, to virtual switch 117b, vmNIC 113a now appears to be capable of creating and offering VFs. Thus, in embodiments, exposing the NIC switch capability associated with the first network driver to the virtual switch includes instantiating a filter driver that emulates one or more NIC switch functions. In other examples, driver 115a presents the NIC switch capability to virtual switch 117b itself.

Notably, while act 305 appears after act 302 in Figure 3, act 305 could occur at any time after the creation of the virtual switch (act 303), including concurrent with the creation of the virtual switch.

Method 300 also comprises act 306 of identifying a PCIe VF offer by the root partition. In some embodiments, act 306 comprises identifying an offer by the root partition of a first PCle VF to the L1 child partition. For example, VPCI VSC 116a identifies a VF offer by VPCI VSP 114a.

Method 300 also comprises act 307 of offering the PCle VF to the L2 child partition. In some embodiments, act 307 comprises offering the first PCle VF to the L2 child partition. For example, VPCI VSP 114b offers the VF identified by VPCI VSC 116a to child partition 111a.

As mentioned, in embodiments, network stack 124 and/or guest OS 121 determines whether a given VF is assignable to an L2GVM or not and either consumes or passes through the VF accordingly. Thus, in some embodiments, method 300 further comprises determining that the first PCIe VF is assignable before offering the first PCle VF to the L2 child partition. In these embodiments, method 300 may further comprise preventing the first network driver from activating the first PCIe VF based on determining that the first PCIe VF is assignable (e.g., so the VF is not consumed by child partition 110a). In other embodiments, method 300 further comprises identifying an offer by the root partition of a second PCle VF to the L1 child partition, determining that the second PCIe VF is not assignable, and activating the second PCIe VF at the first network driver.

As mentioned, in embodiments, network stack 124 and/or guest OS 121 communicates and coordinates with root partition 109 to request an additional VF, destroy an existing VF, and the like. Thus, in some embodiments, method 300 may further comprise revoking the first PCIe VF from the L2 child partition.

As mentioned, embodiments are capable of passing through any number of VFs supported by network interface 106 to L2GVMs, based on duplication of components (e.g., creating new instances at child partition 110a). Thus, in some embodiments of method 300, the virtual switch is a first virtual switch, the synthetic data path is a first synthetic data path, the L2 child partition is a first L2 child partition. In these embodiments, method 300 further comprises: creating a second virtual switch within the L1 child partition; establishing, by the second virtual switch, a second synthetic data path between a second synthetic network adapter of the root partition and a third network driver executing in a second L2 child partition created by the L1 child partition; exposing the NIC switch capability to the second virtual switch; identifying an offer by the root partition of a second PCle VF to the L1 child partition; and offering the second PCIe VF to the second L2 child partition.

Alternatively or in addition to the other examples described herein, examples include any combination of the following:
Clause 1. A method implemented in a computer system that includes a processor system, the method comprising, at an L1 child partition of the computer system: loading a first network driver in the L1 child partition, the first network driver exposing a first synthetic network adapter of a root partition of the computer system to the L1 child partition; creating a virtual switch within the L1 child partition; establishing, by the virtual switch, a synthetic data path between the first synthetic network adapter and a second network driver executing in an L2 child partition created by the L1 child partition; exposing a NIC switch capability associated with the first network driver to the virtual switch; identifying an offer by the root partition of a first PCle VF to the L1 child partition; and offering the first PCle VF to the L2 child partition.
Clause 2. The method of clause 1, wherein the first network driver and the second network driver are each a netVSC driver.
Clause 3. The method of any one of clauses 1 to 2, wherein the virtual switch exposes a second synthetic network adapter to the L2 child partition and the second network driver exposes the second synthetic network adapter to the L2 child partition.
Clause 4. The method of any one of clauses 1 to 3, wherein exposing the NIC switch capability associated with the first network driver to the virtual switch includes instantiating a filter driver that emulates one or more NIC switch functions.
Clause 5. The method of clause 4, wherein a VPCI client executing at the level-one child partition identifies the offer by the root partition of the first PCIe VF.
Clause 6. The method of clause 5, wherein the VPCI client is a VPCI VSC.
Clause 7. The method of any one of clauses 1 to 6, wherein the method further comprises determining that the first PCIe VF is assignable before offering the first PCle VF to the L2 child partition.
Clause 8. The method of clause 7, wherein the method further comprises preventing the first network driver from activating the first PCIe VF based on determining that the first PCIe VF is assignable.
Clause 9. The method of any one of clauses 1 to 8, wherein the method further comprises loading a VPCI provider in the L1 child partition and offering the first PCle VF to the L2 child partition comprises offering the first PCle VF by the VPCI provider.
Clause 10. The method of clause 9, wherein the VPCI provider is a VPCI VSP.
Clause 11. The method of any one of clauses 1 to 10, wherein the method further comprises revoking the first PCIe VF from the L2 child partition.
Clause 12. The method of any one of clauses 1 to 11, wherein the method further comprises identifying an offer by the root partition of a second PCle VF to the L1 child partition; determining that the second PCIe VF is not assignable; and activating the second PCIe VF at the first network driver.
Clause 13. The method of any one of clauses 1 to 11, wherein, the virtual switch is a first virtual switch, the synthetic data path is a first synthetic data path, the L2 child partition is a first L2 child partition, and the method further comprises: creating a second virtual switch within the L1 child partition; establishing, by the second virtual switch, a second synthetic data path between a second synthetic network adapter of the root partition and a third network driver executing in a second L2 child partition created by the L1 child partition; exposing the NIC switch capability to the second virtual switch; identifying an offer by the root partition of a second PCle VF to the L1 child partition; and offering the second PCIe VF to the second L2 child partition.
Clause 14. A computer system, comprising: a processor system; and a computer storage medium that stores computer-executable instructions that are executable by the processor system to, at an L1 child partition of the computer system: load a first network driver in the L1 child partition, the first network driver exposing a first synthetic network adapter of a root partition of the computer system to the L1 child partition; create a virtual switch within the L1 child partition; establish, by the virtual switch, a synthetic data path between the first synthetic network adapter and a second network driver executing in an L2 child partition created by the L1 child partition; expose a NIC switch capability associated with the first network driver to the virtual switch based on instantiating a filter driver that emulates one or more NIC switch functions; identify an offer by the root partition of a first PCle VF to the L1 child partition; and offer the first PCle VF to the L2 child partition.
Clause 15: The computer system of clause 14, wherein the first network driver and the second network driver are each a netVSC driver.
Clause 16. The computer system of any one of clauses 14 or 15, wherein the virtual switch exposes a second synthetic network adapter to the L2 child partition, and the second network driver exposes the second synthetic network adapter to the L2 child partition.
Clause 17. The computer system of any one of clauses 14 to 16, wherein a VPCI client executing at the level-one child partition identifies the offer by the root partition of the first PCIe VF.
Clause 18. The computer system of any one of clauses 14 to 17, wherein the computer-executable instructions are also executable by the processor system to determine that the first PCIe VF is assignable before offering the first PCle VF to the L2 child partition; and prevent the first network driver from activating the first PCIe VF based on determining that the first PCIe VF is assignable.
Clause 19. The computer system of any one of clauses 14 to 18, wherein the computer-executable instructions are also executable by the processor system to load a VPCI provider in the L1 child partition and offering the first PCle VF to the L2 child partition comprises offering the first PCle VF by the VPCI provider.
Clause 20. A computer storage medium that stores computer-executable instructions that are executable by a processor system to, at an L1 child partition of a computer system: load a first netVSC driver in the L1 child partition, the first netVSC driver exposing a first synthetic network adapter of a root partition of the computer system to the L1 child partition; create a virtual switch within the L1 child partition; establish, by the virtual switch, a synthetic data path between the first synthetic network adapter and a second netVSC driver executing in an L2 child partition created by the L1 child partition; load a virtual VPCI VSP in the L1 child partition; load a filter driver that emulates one or more NIC switch functions; expose, by the filter driver, a NIC switch capability associated with the first netVSC driver to the virtual switch; identify an offer by the root partition of a first PCle VF to the L1 child partition; and offer the first PCle VF to the L2 child partition by the VPCI provider.

Therefore, a method is disclosed for managing network communication in a virtual machine hosting computer system with nested child partitions. The method involves loading a network driver in a level-one child partition and creating a virtual switch within the level-one child partition. The virtual switch establishes a synthetic data path between a synthetic network adapter offered by a root partition and a network driver in a level-two child partition. A network interface controller (NIC) switch capability is exposed to the virtual switch, and a peripheral component interconnect express (PCle) virtual function offered by the root partition is passed from the level-one child partition to the level-two child partition, enabling the level-two child partition to take advantage of the PCIe virtual function.

Embodiments of the disclosure comprise or utilize a special-purpose or general-purpose computer system (e.g., computer system 101) that includes computer hardware, such as, for example, a processor system (e.g., processor system 103) and system memory (e.g., memory 104), as discussed in greater detail below. Embodiments within the scope of the present disclosure also include physical and other computer-readable media for carrying or storing computer-executable instructions and/or data structures. Such computer-readable media can be any available media accessible by a general-purpose or special-purpose computer system. Computer-readable media that store computer-executable instructions and/or data structures are computer storage media (e.g., storage medium 105). Computer-readable media that carry computer-executable instructions and/or data structures are transmission media. Thus, embodiments of the disclosure can comprise at least two distinctly different kinds of computer-readable media: computer storage media and transmission media.

Computer storage media are physical storage media that store computer-executable instructions and/or data structures. Physical storage media include computer hardware, such as random access memory (RAM), read-only memory (ROM), electrically erasable programmable ROM (EEPROM), solid state drives (SSDs), flash memory, phase-change memory (PCM), optical disk storage, magnetic disk storage or other magnetic storage devices, or any other hardware storage device(s) which store program code in the form of computer-executable instructions or data structures, which can be accessed and executed by a general-purpose or special-purpose computer system to implement the disclosed functionality.

Transmission media include a network and/or data links that carry program code in the form of computer-executable instructions or data structures that are accessible by a general-purpose or special-purpose computer system. A "network" is defined as a data link that enables the transport of electronic data between computer systems and other electronic devices. When information is transferred or provided over a network or another communications connection (either hardwired, wireless, or a combination thereof) to a computer system, the computer system may view the connection as transmission media. The scope of computer-readable media includes combinations thereof.

Upon reaching various computer system components, program code in the form of computer-executable instructions or data structures can be transferred automatically from transmission media to computer storage media (or vice versa). For example, computer-executable instructions or data structures received over a network or data link can be buffered in RAM within a network interface module (e.g., network interface 106) and eventually transferred to computer system RAM and/or less volatile computer storage media at a computer system. Thus, computer storage media can be included in computer system components that also utilize transmission media.

Computer-executable instructions comprise, for example, instructions and data which when executed at a processor system, cause a general-purpose computer system, a special-purpose computer system, or a special-purpose processing device to perform a function or group of functions. In embodiments, computer-executable instructions comprise binaries, intermediate format instructions (e.g., assembly language), or source code. In embodiments, a processor system comprises one or more central processing units (CPUs), one or more graphics processing units (GPUs), one or more neural processing units (NPUs), and the like.

In some embodiments, the disclosed systems and methods are practiced in network computing environments with many types of computer system configurations, including personal computers, desktop computers, laptop computers, message processors, hand-held devices, multiprocessor systems, microprocessor-based or programmable consumer electronics, network PCs, minicomputers, mainframe computers, mobile telephones, PDAs, tablets, pagers, routers, switches, and the like. In some embodiments, the disclosed systems and methods are practiced in distributed system environments where different computer systems, which are linked through a network (e.g., by hardwired data links, wireless data links, or by a combination of hardwired and wireless data links), both perform tasks. As such, in a distributed system environment, a computer system may include a plurality of constituent computer systems. Program modules may be located in local and remote memory storage devices in a distributed system environment.

In some embodiments, the disclosed systems and methods are practiced in a cloud computing environment. In some embodiments, cloud computing environments are distributed, although this is not required. When distributed, cloud computing environments may be distributed internally within an organization and/or have components possessed across multiple organizations. In this description and the following claims, "cloud computing" is a model for enabling on-demand network access to a shared pool of configurable computing resources (e.g., networks, servers, storage, applications, and services). A cloud computing model can be composed of various characteristics, such as on-demand self-service, broad network access, resource pooling, rapid elasticity, measured service, and so forth. A cloud computing model may also come in the form of various service models such as Software as a Service (SaaS), Platform as a Service (PaaS), Infrastructure as a Service (laaS), etc. The cloud computing model may also be deployed using different deployment models such as private cloud, community cloud, public cloud, hybrid cloud, etc.

Some embodiments, such as a cloud computing environment, comprise a system with one or more hosts capable of running one or more VMs. During operation, VMs emulate an operational computing system, supporting an OS and perhaps one or more other applications. In some embodiments, each host includes a hypervisor that emulates virtual resources for the VMs using physical resources that are abstracted from the view of the VMs. The hypervisor also provides proper isolation between the VMs. Thus, from the perspective of any given VM, the hypervisor provides the illusion that the VM is interfacing with a physical resource, even though the VM only interfaces with the appearance (e.g., a virtual resource) of a physical resource. Examples of physical resources include processing capacity, memory, disk space, network bandwidth, media drives, and so forth.

Although the subject matter has been described in language specific to structural features and/or methodological acts, it is to be understood that the subject matter defined in the appended claims is not necessarily limited to the described features or acts described supra or the order of the acts described supra. Rather, the described features and acts are disclosed as example forms of implementing the claims.

The present disclosure may be embodied in other specific forms without departing from its essential characteristics. The described embodiments are only illustrative and not restrictive. All changes that come within the meaning and range of equivalency of the claims are to be embraced within their scope.

When introducing elements in the appended claims, the articles "a," "an," "the," and "said" are intended to mean there are one or more of the elements. The terms "comprising," "including," and "having" are intended to be inclusive and mean that there may be additional elements other than the listed elements. Unless otherwise specified, the terms "set," "superset," and "subset" are intended to exclude an empty set, and thus "set" is defined as a non-empty set, "superset" is defined as a non-empty superset, and "subset" is defined as a non-empty subset. Unless otherwise specified, the term "subset" excludes the entirety of its superset (i.e., the superset contains at least one item not included in the subset). Unless otherwise specified, a "superset" can include at least one additional element, and a "subset" can exclude at least one element.

## Claims

1. A method (300) implemented in a computer system (101) that includes a processor system (103), the method comprising, at a level-one child partition (110a) of the computer system:
loading a first network driver (115a) in the level-one child partition, the first network driver exposing (301) a first synthetic network adapter (113a) of a root partition (109) of the computer system to the level-one child partition;
creating (303) a virtual switch (117b) within the level-one child partition;
establishing (304), by the virtual switch, a synthetic data path between the first synthetic network adapter and a second network driver (115b) executing in a level-two child partition (111a) created by the level-one child partition;
exposing (305) a network interface controller, NIC, switch capability associated with the first network driver to the virtual switch;
identifying (306) an offer by the root partition of a first Peripheral Component Interconnect, PCI, Express, PCle, virtual function, VF, to the level-one child partition; and
offering (307) the first PCle VF to the level-two child partition.

2. The method of claim 1, wherein the first network driver and the second network driver are each a network virtual service client, netVSC, driver.

3. The method of any one of claims 1 to 2, wherein,
the virtual switch exposes a second synthetic network adapter to the level-two child partition, and
the second network driver exposes the second synthetic network adapter to the level-two child partition.

4. The method of any one of claims 1 to 3, wherein exposing the NIC switch capability associated with the first network driver to the virtual switch includes instantiating a filter driver that emulates one or more NIC switch functions.

5. The method of claim 4, wherein a virtual PCI, VPCI, client executing at the level-one child partition identifies the offer by the root partition of the first PCIe VF.

6. The method of claim 5, wherein the VPCI client is a VPCI virtual service client, VPCI VSC.

7. The method of any one of claims 1 to 6, wherein the method further comprises determining that the first PCIe VF is assignable before offering the first PCle VF to the level-two child partition.

8. The method of claim 7, wherein the method further comprises preventing the first network driver from activating the first PCIe VF based on determining that the first PCIe VF is assignable.

9. The method of any one of claims 1 to 8, wherein,
the method further comprises loading a virtual PCI, VPCI, provider in the level-one child partition, and
offering the first PCle VF to the level-two child partition comprises offering the first PCle VF by the VPCI provider.

10. The method of claim 9, wherein the VPCI provider is a VPCI virtual service provider, VPCI VSP.

11. The method of any one of claims 1 to 10, wherein the method further comprises revoking the first PCIe VF from the level-two child partition.

12. The method of any one of claims 1 to 11, wherein the method further comprises:
identifying an offer by the root partition of a second PCle VF to the level-one child partition;
determining that the second PCIe VF is not assignable; and
activating the second PCIe VF at the first network driver.

13. The method of any one of claims 1 to 11, wherein,
the virtual switch is a first virtual switch,
the synthetic data path is a first synthetic data path,
the level-two child partition is a first level-two child partition, and
the method further comprises:
creating a second virtual switch within the level-one child partition;
establishing, by the second virtual switch, a second synthetic data path between a second synthetic network adapter of the root partition and a third network driver executing in a second level-two child partition created by the level-one child partition;
exposing the NIC switch capability to the second virtual switch;
identifying an offer by the root partition of a second PCle VF to the level-one child partition; and
offering the second PCIe VF to the second level-two child partition.

14. A computer system (101), comprising:
a processor system (103); and
a computer storage medium (105) that stores computer-executable instructions that are executable by the processor system to, at a level-one child partition of the computer system:
load a first network driver in the level-one child partition, the first network driver exposing (301) a first synthetic network adapter of a root partition of the computer system to the level-one child partition;
create (303) a virtual switch within the level-one child partition;
establish (304), by the virtual switch, a synthetic data path between the first synthetic network adapter and a second network driver executing in a level-two child partition created by the level-one child partition;
expose (305) a network interface controller, NIC, switch capability associated with the first network driver to the virtual switch based on instantiating a filter driver that emulates one or more NIC switch functions;
identify (306) an offer by the root partition of a first Peripheral Component Interconnect, PCI, Express, PCle, virtual function, VF, to the level-one child partition; and
offer (307) the first PCle VF to the level-two child partition.

15. A computer storage medium (105) that stores computer-executable instructions that are executable by a processor system to, at a level-one child partition of a computer system:
load a first network virtual service client, netVSC, driver in the level-one child partition, the first netVSC driver exposing (301) a first synthetic network adapter of a root partition of the computer system to the level-one child partition;
create (303) a virtual switch within the level-one child partition;
establish (304), by the virtual switch, a synthetic data path between the first synthetic network adapter and a second netVSC driver executing in a level-two child partition created by the level-one child partition;
load a virtual Peripheral Component Interconnect, PCI, virtual service provider, VPCI VSP, in the level-one child partition;
load a filter driver that emulates one or more network interface controller, NIC, switch functions;
expose (305), by the filter driver, a NIC switch capability associated with the first netVSC driver to the virtual switch;
identify (306) an offer by the root partition of a first PCI Express, PCle, virtual function, VF, to the level-one child partition; and
offer (307) the first PCle VF to the level-two child partition by the VPCI provider.
